# EUROPEAN PATENT SPECIFICATION

(11) **EP 2 130 943 B1**
(45) Date of publication and mention of the grant of the patent: **11.09.2019**
(21) Application number: 08721926.7
(22) Date of filing: 12.03.2008
(51) Int. Cl.: C23C 18/12, B05D 5/00, C23C 20/08, C23C 28/04, B32B 18/00

(54) **METHOD OF PREVENTING SULFIDE CORROSION, HIGH-TEMPERATURE MEMBER WITH RESISTANCE TO SULFIDE CORROSION**
VERFAHREN ZUR VERHINDERUNG VON SULFIDKORROSION, GEGENÜBER SULFIDKORROSION BESTÄNDIGES HOCHTEMPERATURBAUELEMENT
PROCÉDÉ POUR EMPÊCHER LA CORROSION PAR LE SULFURE, ÉLÉMENT HAUTE TEMPÉRATURE AVEC UNE RÉSISTANCE À LA CORROSION PAR LE SULFURE

(30) Priority: 27.03.2007 JP 2007080715; 22.11.2007 JP 2007303585
(43) Date of publication of application: 09.12.2009
(73) Proprietor: Central Research Institute of Electric Power Industry, Chiyoda-ku Tokyo 1008126 (JP)
(72) Inventor: KAWASE, Makoto, Yokosuka-shi Kanagawa 240-0196 (JP); MORINAGA, Masahiko, Yokosuka-shi Kanagawa 240-0196 (JP)
(74) Representative: Strehl Schübel-Hopf & Partner
(86) International application number: PCT/JP2008/054510
(87) International publication number: WO 2008/117665

(56) References cited:
- JP-A- 09 272 990
- JP-A- 60 125 375
- JP-A- 63 007 379
- JP-A- 2003 042 403
- JP-A- 2007 009 315
- JP-A- 2007 009 315

## Description

### Technical Field

This invention relates to a method for preventing sulfidation corrosion of a high temperature member, such as corrosion by hydrogen sulfide or the like or sulfide corrosion cracking; a sulfidation corrosion-resistant high temperature member.

### Background Art

In thermal power generation equipment, for example, it has been a major problem that gases produced during combustion of a fuel corrode structural materials constituting the equipment.

That is, there has been a problem that the wall thickness of a high temperature heat exchanger tube, such as a boiler water wall tube (substrate: ferritic steel), a superheater tube, or a reheater tube, of a thermal power generation boiler, as an example of the structural material, becomes smaller than the lower limit wall thickness prescribed by a design owing to sulfidation corrosion. Moreover, the problem has occurred that cracks called an elephant skin (grooving corrosion) appear on the surface of the high temperature heat exchanger tube.

As a method for solving or avoiding such problems , a method is available which comprises coating the structural material beforehand with a film having sulfidation corrosion resistance to provide protection from sulfidation corrosion. There is also a method in which a cracked portion is coated with the film, after cracking, to repair the cracks. As the above film, a nickel-chromium film formed mainly by plasma spraying has been used.

On the other hand, a proposal has been made for a method in which a structural material or the like is coated with titanium oxide particles to provide a film comprising titanium oxide particles, thereby enhancing the resistance of the structural material to sulfidation corrosion (see, for example, Patent Document 1) .

Patent Document 1: JP-A-9-272990

A method for preventing sulfidation corrosion including the formation of an iron oxide layer between a steel substrate and a silicon oxide and/or titanium oxide coating layer is disclosed in JP 2003 042403 A. Another sulfidation corrosion method related to the present invention is disclosed in JP 2007 009315 A.

### Disclosure of the Invention

### Problems to be solved by the invention

However, even when the structural material is provided with the film comprising titanium oxide particles, as mentioned above, the problem has arisen that hydrogen sulfide (H₂S) penetrates between the titanium oxide particles to proceed with sulfidation corrosion, thus failing to obtain marked sulfidation corrosion resistance. To improve the sulfidation corrosion resistance of such a film comprising titanium oxide particles, the film has to be thickened, thus causing the problem that peeling of the film is apt to occur, or the problem that the cost of film formation becomes high.

A method is conceivable which coats the surface of a structural material with a coating fluid containing a titanium metal or a titanium compound to form a titanium oxide layer directly on the surface of the structural material, thereby enhancing sulfidation corrosion resistance. However, cracks may occur in the titanium oxide layer owing to internal stress generated during the drying process of the coating solution for formation of the titanium oxide layer on the surface of the structural material. As a result, the problem has occurred that the sulfidation corrosion of the structural material may proceed, starting at the cracks.

The nickel-chromium film formed using plasma spraying has posed the problem that it is expensive and requires a long-term application operation, so that it is unsuitable, from the aspect of cost, for protection or repair of the surface of the structural material.

The present invention has been accomplished in the light of the above-mentioned circumstances. It is an object of the invention to provide a sulfidation corrosion preventing method coping with sulfidation corrosion by preventing the occurrence of cracking in a titanium oxide layer and provide a sulfidation corrosion-resistant high temperature member having excellent sulfidation corrosion resistance

### Means for Solving the Problems

A silicon oxide softens upon reaction with an alkali metal. Thus, a silicon hydroxide layer is normally not prepared on a member which has a possibility to contact a substance containing an alkali metal, such as boiler combustion ash. However, the inventor of the present invention has found that when a coating fluid containing a titanium metal or a titanium compound is coated on a silicon oxide layer to form a titanium oxide layer, the occurrence of cracks on the titanium oxide layer can be prevented, and that since the titanium oxide layer is formed on the silicon oxide layer, moreover, the silicon oxide layer and an alkali metal do not react with each other. These findings have led to the accomplishment of the present invention.

The present invention is defined in the independent claims. Further advantageous features are set out in the dependent claims.

A first aspect of the present invention, intended for solving the above problems, lies in a sulfidation corrosion preventing method comprising: a first step of forming a silicon oxide layer on a surface of a substrate; and a second step of coating a titanium-containing coating fluid containing a titanium metal or a titanium compound on the silicon oxide layer, followed by heating and oxidation, to form a first titanium oxide layer.

According to the first aspect, since the silicon oxide layer is provided, cracks can be prevented from appearing in the first titanium oxide layer, even if internal stress occurs within the first titanium oxide layer when the first titanium oxide layer is formed. Thus, the first titanium oxide layer, which is dense and has very few cracks, can be formed on the silicon oxide layer.

A second aspect of the present invention lies in the sulfidation corrosion preventing method described in the first aspect, characterized in that the first step is to coat a silicon-containing coating fluid containing a silicon compound, followed by heating and oxidation, to form the silicon oxide layer.

According to such a second aspect, the silicon oxide layer can be formed easily.

A third aspect of the present invention lies in the sulfidation corrosion preventing method described in the first or second aspect, characterized in that the silicon compound is at least one of silicon hydride, a silazane compound, a siloxane compound, and a silicate.

According to such a third aspect, the silicon oxide layer can be formed more easily.

A fourth aspect of the present invention lies in the sulfidation corrosion preventing method described in any one of the first to third aspects, characterized in that the silicon-containing coating fluid further contains at least one of boron nitride, aluminum oxide, magnesium oxide, zirconium oxide, and boron oxide.

According to such a fourth aspect, the silicon oxide layer can be formed even more easily.

A fifth aspect of the present invention lies in the sulfidation corrosion preventing method described in any one of the first to fourth aspects, further comprising a third step of forming a carbon layer on a surface of the first titanium oxide layer, and a fourth step of coating a titanium-containing coating fluid containing a titanium metal or a titanium compound, followed by heating and oxidation, to form a second titanium oxide layer.

According to such a fifth aspect, iron or the like constituting the substrate can be prevented from diffusing to the surface of a sulfidation corrosion-resistant high temperature member through the second titanium oxide layer by a diffusion reaction. Even if internal stress occurs within the second titanium oxide layer, the carbon layer deforms according to the internal stress, and can ease the internal stress within the second titanium oxide layer . Thus, the second titanium oxide layer with few cracks can be formed on the carbon layer.

A sixth aspect of the present invention lies in a sulfidation corrosion preventing method comprising: a first coating step of coating a silicon-containing coating fluid containing a silicon compound on a surface of a substrate, followed by drying, to form a silicon-containing coating layer ; a second coating step of coating a first titanium-containing coating fluid containing a titanium metal or a titanium compound on the silicon-containing coating layer, followed by drying, to form a first titanium-containing coating layer; and a heating and oxidation step of heating and oxidizing the silicon-containing coating layer and the first titanium-containing coating layer to form a silicon oxide layer and a first titanium oxide layer.

According to the sixth aspect, since the silicon oxide layer is provided, cracks can be prevented from appearing in the first titanium oxide layer, even if internal stress occurs within the first titanium oxide layer when the first titanium oxide layer is formed. Thus, the first titanium oxide layer, which is dense and has very few cracks, can be formed on the silicon oxide layer. Also, the silicon oxide layer and the first titanium oxide layer are formed upon collective heating and oxidation. Thus, the possibility for cracks to be generated in these oxide layers becomes so low that the oxide layers having high corrosion resistance can be formed on the substrate. Furthermore, the collective heating and oxidation save time and labor in production, as compared with individual heating of each coating layer. Thus, the oxide layers can be formed rationally on the substrate.

A seventh aspect of the present invention lies in the sulfidation corrosion preventing method described in the sixth aspect, further comprising, after the second coating step, a carbon layer formation step of forming a carbon layer on the first titanium-containing coating layer, and a third coating step of coating a second titanium-containing coating fluid on the carbon layer, followed by drying, to form a second titanium-containing coating layer, and wherein in the heating and oxidation step, after the third coating step, the carbon layer is heated for degreasing, and the silicon-containing coating layer, the first titanium-containing coating layer, and the second titanium-containing coating layer are heated and oxidized to form the silicon oxide layer, the first titanium oxide layer, and the second titanium oxide layer.

According to such a seventh aspect, iron or the like constituting the substrate can be prevented from diffusing to the surface of a sulfidation corrosion-resistant high temperature member through the second titanium oxide layer by a diffusion reaction. Even if internal stress occurs within the second titanium oxide layer, the carbon layer deforms according to the internal stress, and can ease the internal stress within the second titanium oxide layer. Thus, the second titanium oxide layer with few cracks can be formed on the carbon layer. As a result, precipitation or deposition of carbon can be prevented more reliably. Besides, heating and oxidation can result in the formation of the silicon oxide layer and the titanium oxide layer, and can perform degreasing of carbon at the same time.

An eighth aspect of the present invention lies in the sulfidation corrosion preventing method described in the sixth aspect, further comprising, after the heating and oxidation step, a carbon layer formation step of forming a carbon layer on the first titanium oxide layer, and a titanium oxide layer formation step of coating a second titanium-containing coating fluid on the carbon layer, followed by drying and heating, to degrease the carbon layer and form a second titanium oxide layer.

According to such an eighth aspect, the silicon oxide layer and the first titanium oxide layer are formed upon collective heating and oxidation, whereafter the second titanium oxide layer is formed and the carbon layer is degreased.

A ninth aspect of the present invention lies in a sulfidation corrosion-resistant high temperature member comprising a substrate, a silicon oxide layer provided on a surface of the substrate, and a first titanium oxide layer provided on the silicon oxide layer.

According to such a ninth aspect, the high temperature member has the first titanium oxide layer which is dense, has very few cracks, and is uniform, in comparison with a similar member comprising a titanium oxide layer directly formed on a substrate (no silicon oxide layer is provided) . Thus, the member has excellent sulfidation corrosion resistance.

A tenth aspect of the present invention lies in the sulfidation corrosion-resistant high temperature member described in the ninth aspect, further comprising a carbon layer provided on the first titanium oxide layer, and a second titanium oxide layer provided on the carbon layer.

According to such a tenth aspect, the carbon layer is provided between the first titanium oxide layer and the second titanium oxide layer. Thus, iron or the like constituting the substrate can be prevented from diffusing to the surface of the sulfidation corrosion-resistant high temperature member through the second titanium oxide layer by a diffusion reaction. Moreover, the sulfidation corrosion-resistant high temperature member has the second titanium oxide layer which has very few cracks, and is uniform. Thus, it has better sulfidation corrosion resistance.

An eleventh aspect not embraced by the present invention but useful for its understanding lies in a heat exchanger tube repairing method comprising: a first step of forming a silicon oxide layer on a surface of a cracked site of a heat exchanger tube disposed in a boiler; and a second step of coating a titanium-containing coating fluid containing a titanium metal or a titanium compound on the silicon oxide layer, followed by heating and oxidation, to form a first titanium oxide layer.

According to such an eleventh aspect, cracks caused to the heat exchanger tube are repaired with the silicon oxide layer and the first titanium oxide layer formed on the cracks. According to the present embodiment, moreover, the first titanium oxide layer, which is dense and involves very few cracks, is formed on the silicon oxide layer. Thus, the exposure of a cracked portion from cracks is curtailed, and the cracks can be repaired more reliably.

A twelfth aspect lies in the heat exchanger tube repairing method described in the eleventh aspect, characterized in that the first step is to coat a silicon-containing coating fluid containing a silicon compound, followed by heating and oxidation, to form the silicon oxide layer.

According to such a twelfth aspect, the silicon oxide layer can be formed easily.

A thirteenth aspect lies in the heat exchanger tube repairing method described in the eleventh or twelfth aspect, characterized in that the silicon compound is at least one of silicon hydride, a silazane compound, a siloxane compound, and a silicate.

According to such a thirteenth aspect, the silicon oxide layer can be formed more easily.

A fourteenth aspect lies in the heat exchanger tube repairing method described in any one of the eleventh to thirteenth aspects, characterized in that the silicon-containing coating fluid further contains at least one of boron nitride, aluminum oxide, magnesium oxide, zirconium oxide, and boron oxide.

According to such a fourteenth aspect, the silicon oxide layer can be formed even more easily.

A fifteenth aspect lies in the heat exchanger tube repairing method described in any one of the eleventh to fourteenth aspects, further comprising a third step of forming a carbon layer on a surface of the first titanium oxide layer, and a fourth step of coating a titanium-containing coating fluid containing a titanium metal or a titanium compound, followed by heating and oxidation, to form a second titanium oxide layer.

According to such a fifteenth aspect, cracks caused to the heat exchanger tube are repaired more reliably with the carbon layer and the second titanium oxide layer as well as the silicon oxide layer and the first titanium oxide layer formed on the cracks. According to the present embodiment, moreover, even if internal stress occurs within the second titanium oxide layer, the carbon layer deforms according to the internal stress, and can ease the internal stress within the second titanium oxide layer. Thus, the second titanium oxide layer with few cracks is formed on the carbon layer. Thus, the exposure of a cracked portion from cracks is curtailed, and the cracks can be repaired even more reliably.

A sixteenth aspect lies in a heat exchanger tube repairing method comprising: a first coating step of coating a silicon-containing coating fluid containing a silicon compound on a surface of a cracked site of a heat exchanger tube disposed in a boiler, followed by drying, to form a silicon-containing coating layer; a second coating step of coating a first titanium-containing coating fluid containing a titanium metal or a titanium compound on the silicon-containing coating layer, followed by drying, to form a first titanium-containing coating layer; and a heating and oxidation step of heating and oxidizing the silicon-containing coating layer and the first titanium-containing coating layer to form a silicon oxide layer and a first titanium oxide layer.

According to such a sixteenth aspect, cracks caused to the heat exchanger tube are repaired with the silicon oxide layer and the first titanium oxide layer formed on the cracks. In the present embodiment, moreover, the silicon oxide layer and the first titanium oxide layer are formed upon collective heating and oxidation. Thus, the possibility for cracks to be generated in these oxide layers becomes even lower. Hence, the exposure of a cracked portion from cracks is further curtailed, and the cracks can be repaired even more reliably.

A seventeenth aspect lies in the heat exchanger tube repairing method described in the sixteenth aspect, further comprising, after the second coating step, a carbon layer formation step of forming a carbon layer on the first titanium-containing coating layer, and a third coating step of coating a second titanium-containing coating fluid on the carbon layer, followed by drying, to form a second titanium-containing coating layer, and wherein in the heating and oxidation step, after the third coating step, the carbon layer is heated for degreasing, and the silicon-containing coating layer, the first titanium-containing coating layer, and the second titanium-containing coating layer are heated and oxidized to form the silicon oxide layer, the first titanium oxide layer, and the second titanium oxide layer.

According to such a seventeenth aspect, cracks caused to the heat exchanger tube are repaired with the carbon layer and the second titanium oxide layer as well as the silicon oxide layer and the first titanium oxide layer formed on the cracks. In the present embodiment, moreover, the silicon oxide layer, the first titanium oxide layer, and the second titanium oxide layer are formed upon collective heating and oxidation. Thus, the possibility for cracks to be generated in these oxide layers becomes even lower. Hence, the exposure of a cracked portion from cracks is further curtailed, and the cracks can be repaired even more reliably.

An eighteenth aspect lies in the heat exchanger tube repairing method described in the sixteenth aspect, further comprising, after the heating and oxidation step, a carbon layer formation step of forming a carbon layer on the first titanium oxide layer, and a titanium oxide layer formation step of coating a second titanium-containing coating fluid on the carbon layer, followed by drying and heating, to degrease the carbon layer and form a second titanium oxide layer.

According to such an eighteenth aspect, the silicon oxide layer and the first titanium oxide layer are formed upon collective heating and oxidation, whereafter the second titanium oxide layer is formed and the carbon layer is degreased.

### Effects of the Invention

According to the sulfidation corrosion preventing method concerned with the present invention, the first titanium oxide layer is formed on the silicon oxide layer. Thus, cracks can be prevented from appearing in the first titanium oxide layer, even if internal stress occurs within the first titanium oxide layer when the first titanium oxide layer is formed. Consequently, the first titanium oxide layer, which is dense, involves very few cracks, and is uniform, can be formed on the silicon oxide layer. Furthermore, the sulfidation corrosion-resistant high temperature member according to the present invention has excellent sulfidation corrosion resistance. Thus, the reliability and durability of instruments using this member can be dramatically improved. Besides, the heat exchanger tube repairing method according to the present invention can repair cracks caused to the heat exchanger tube reliably and inexpensively.

### Brief Description of the Drawings

[Fig. 1] is a schematic view showing a sulfidation corrosion-resistant high temperature member according to Embodiment 1.
[Fig. 2] is a schematic view showing a sulfidation corrosion-resistant high temperature member according to Embodiment 2.
[Fig. 3] is an enlarged sectional photograph of a plate-shaped specimen A of Example 1 in a sulfidation corrosion test.
[Fig. 4] is an enlarged sectional photograph of a plate-shaped specimen B of Comparative Example 1 in the sulfidation corrosion test.

### Description of the Numerals

1, 1A Sulfidation corrosion-resistant high temperature member
- 10: Substrate
- 20: Silicon oxide layer
- 30: First titanium oxide layer
- 40: Carbon layer
- 50: Second titanium oxide layer

### Best Mode for Carrying Out the Invention

The best mode for carrying out the present invention will be described below. The descriptions in the present embodiments are illustrative, and the present invention is not limited to the following descriptions.

### (Embodiment 1)

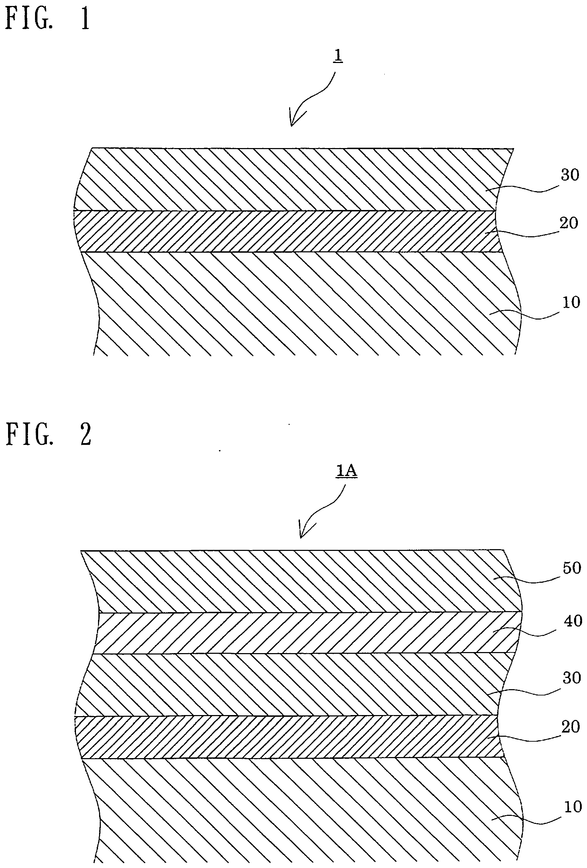

Fig. 1 is a schematic view showing a sulfidation corrosion-resistant high temperature member according the present embodiment. As shown in Fig. 1, a sulfidation corrosion-resistant high temperature member 1 has a silicon oxide layer 20 and a first titanium oxide layer 30 sequentially formed on the surface of a substrate 10.

The silicon oxide layer 20 is not limited, as long as it can be densely formed on the surface of the substrate 10. Preferably, the silicon oxide layer 20 is an amorphous one. The silicon oxide layer 20 configured in the amorphous state makes it possible to prevent the occurrence of cracks in the first titanium oxide layer 30 when the first titanium oxide layer 30 is formed. As a result, the first titanium oxide layer 30, which is dense, involves very few cracks, and is uniform, can be formed. Details will be described later.

Examples of a silicon oxide constituting the silicon oxide layer 20 are SiO, SiO₂, and mixed states of them. The thickness of the silicon oxide layer 20 is not limited, but is preferably in the range of 0.1 to 10 *µ*m. The silicon oxide layer 20 of the thickness in this range can be easily formed and, when the first titanium oxide layer 30 is formed, can sufficiently prevent the occurrence of cracking in the first titanium oxide layer 30.

The silicon oxide layer 20 may contain boron nitride, aluminum oxide, magnesium oxide, zirconium oxide, boron oxide, or a mixture of these. By incorporating any of these substances into the silicon oxide layer 20, the strength of the silicon oxide layer 20 can be enhanced.

The first titanium oxide layer 30 is not limited, as long as it can be densely formed on the silicon oxide layer 20. Examples of a titanium oxide constituting the first titanium oxide layer 30 are TiO, Ti₂O₃, TiO₂, Ti₂O₅, TiO₃, and a mixed state of them. The thickness of the first titanium oxide layer 30 is not limited, but is preferably in the range of 0.01 to 10 *µ*m, more preferably in the range of 0.01 to 5 *µ*m, and particularly preferably in the range of 0.01 to 1 *µ*m. The first titanium oxide layer 30 of a thickness in this range can be easily formed, and can fully prevent the sulfidation corrosion of the substrate 10.

The substrate 10 is not limited, as long as it has sufficient heat resistance to temperatures, at which the sulfidation corrosion-resistant high temperature member 1 is used, and it enables the silicon oxide layer 20 to be provided on its surface. Examples of a material constituting the substrate 10 are heat-resistant structural materials such as ferritic steel, austenitic steel, and martensitic steel.

The sulfidation corrosion-resistant high temperature member 1 of such a structure has the first titanium oxide layer 30, which is dense, involves very few cracks, and is uniform, as compared with a corresponding member having the titanium oxide layer directly formed on the substrate (the silicon oxide layer 20 is absent). Thus, the sulfidation corrosion-resistant high temperature member 1 has excellent sulfidation corrosion resistance. Details will be furnished later.

The sulfidation corrosion preventing method according to the present embodiment will be described below. The sulfidation corrosion preventing method according to the present embodiment comprises coating a silicon-containing coating fluid containing a silicon compound on the surface of the substrate 10, followed by heating and oxidation, to form the silicon oxide layer 20, and coating a titanium-containing coating fluid containing a titanium metal or a titanium compound on the silicon oxide layer 20, followed by heating and oxidation, to form the first titanium oxide layer 30.

The silicon-containing coating fluid refers to those including a solution having the silicon compound dissolved therein, and a dispersion having the silicon compound dispersed therein. The silicon compound is not limited, as long as it can form the silicon oxide layer 20 by heating treatment. Examples of this are silicon hydrides (e.g., alkoxysilanes and chlorosilanes), silazane compounds (e.g., polysilazanes), siloxane compounds (e.g., siloxanes and silicones), and silicates (e.g., methyl silicate and ethyl silicate).

The titanium-containing coating fluid containing the silicon compound is not limited, as long as it can be coated on the substrate 10, and then heated and oxidized to form the silicon oxide layer 20. Examples of the silicon-containing coating fluid are AQUAMICA NP110, NN310, NN320, NL110A, NL120A, NL150A, NP110, NP140, and SP140 (AZ Electronic Materials).

The above silicon-containing coating fluid may contain boron nitride, aluminum oxide, magnesium oxide, zirconium oxide, boron oxide, or a mixture of them.

The titanium-containing coating fluid refers to those including a solution having a titanium metal or a titanium compound dissolved therein, a dispersion having a titanium metal or a titanium compound dispersed therein, and so on. The titanium metal refers to a substance consisting of titanium alone. The coating fluid can be prepared, for example, by dispersing a fine powder of titanium in a solvent, if desired, together with an additive such as a dispersing agent. Examples of the titanium compound are titanium tetraethoxide (Ti(C₂H₅O)₄), titanium (IV) methoxide (Ti(OCH₃)₄), titanium boride (TiB₂), titanium trichloride (TiCl₃), titanium (IV) sulfate (Ti(SO₄)₂), titanium (III) sulfate (Ti₂(SO₄)₃), lithium titanium phosphate (LiTi₂P₃O₁₂), potassium titanium oxalate (K₂TiO(C₂O₄)₂), titanium (IV) bromide (TiBr₄), sodium titanium (IV) fluoride (Na₂TiF₆), titanium (IV) fluoride (TiF₄), ammonium titanium (IV) fluoride ((NH₄)₂TiF₆), potassium titanium (IV) fluoride (K₂TiF₆), peroxotitanic acid (Ti(OOH)(OH)₃), titanium tetrachloride (TiCl₄), titanium (IV) oxysulfate (TiOSO₄), titanium alkoxides (titanium tetraisopropoxide (TTIP: Ti((CH₃)₂CHO)₄), etc.), and titanium butoxide (TNBT: Ti(OC₄H₉)₄). Preferred are peroxotitanic acid, titanium tetrachloride, titanium (IV) oxysulfate, titanium alkoxides, and titanium butoxide.

The titanium-containing coating fluid containing the titanium metal or the titanium compound is not limited, if after being coated on the silicon oxide layer 20, then heated and oxidized, it can form the first titanium oxide layer 30 on the silicon oxide layer 20, without leaving impurities on the surface of the silicon oxide layer 20. However, the coating fluid containing the titanium metal is preferred. Examples of the titanium-containing coating fluid are PTA-85 (KON CORPORATION), PTA-170 (KON CORPORATION), PSA-015 (Photocatalytic Materials Inc.), PSA-02 (Photocatalytic Materials Inc.), PSO-306 (Photocatalytic Materials Inc.), AT-01 (Photocatalytic Materials Inc.), AT-03 (Photocatalytic Materials Inc.), peroxotitanic acid (Ti(OOH)(OH)₃), titanium tetrachloride (TiCl₄), titanium (IV) oxysulfate (TiOSO₄), titanium alkoxides (titanium tetraisopropoxide (TTIP: Ti((CH₃)₂CHO)₄, etc.), and titanium butoxide (TNBT: Ti(OC₄H₉)₄).

Using the silicon-containing coating fluid and the titanium-containing coating fluid, the silicon oxide layer 20 and the first titanium oxide layer 30 are formed on the substrate 10. Concretely, the first step is to coat the silicon-containing coating fluid on the substrate 10. A method of coating the silicon-containing coating fluid on the surface of the substrate 10 is not limited. For example, there can be named a so-called spray coating method in which the substrate 10 is sprayed with the silicon-containing coating fluid in a slurry form by use of a spray, a method of immersing the substrate 10 in the silicon-containing coating fluid filled into a vessel, or a method of coating the substrate 10 with the silicon-containing coating fluid with the use of a brush or the like.

Then, the silicon-containing coating fluid is heated and oxidized. No limitations are imposed on the method of heating and oxidizing the silicon-containing coating fluid. Namely, the silicon-containing coating fluid may be directly heated and oxidized, or after the silicon-containing coating fluid is dried, it may be heated and oxidized. In heating and oxidizing the silicon-containing coating fluid, a catalyst such as palladium may be added to the silicon-containing coating fluid. By adding such a catalyst, heating and oxidation of the silicon-containing coating fluid can be promoted, and its heating temperature can be lowered. If porous ash or the like adheres to the surface of the substrate 10, it is preferred to remove a gas (such as air) contained in the porous ash or the like, for example, by means of a suction device (an improved form of a vacuum cleaner or the like), before the coated silicon-containing coating fluid is dried. By removing the gas contained in the porous ash or the like, the silicon oxide layer 20 which is denser can be formed.

Then, the titanium-containing coating fluid is coated on the silicon oxide layer 20, whereafter the titanium-containing coating fluid is heated and oxidized. Nor are any restrictions imposed on the method of coating the titanium-containing coating fluid and the method of heating and oxidizing it, like the method of coating the silicon-containing coating fluid mentioned above. Even with the use of any method of heating and oxidation, a liquid component such as water is removed from the first titanium oxide layer 30 formed from the titanium-containing coating fluid during the course of heating and oxidizing the titanium- containing coating fluid, whereby the first titanium oxide layer 30 is dried. As a result, the first titanium oxide layer 30 shrinks to generate internal stress in the first titanium oxide layer 30.

In the present embodiment, the first titanium oxide layer 30 is provided on the silicon oxide layer 20. Thus, even if internal stress develops within the first titanium oxide layer 30, the occurrence of cracks in the first titanium oxide layer 30 can be prevented, although the reason for this is unknown at the moment. Consequently, the first titanium oxide layer 30, which is dense, involves very few cracks, and is uniform, can be formed on the silicon oxide layer 20.

### (Embodiment 2)

Fig. 2 is a schematic view showing a sulfidation corrosion-resistant high temperature member according to the present embodiment. A sulfidation corrosion-resistant high temperature member 1A of the present embodiment, as shown in Fig. 2, has a carbon layer 40 and a second titanium oxide layer 50 further provided on the first titanium oxide layer 30. That is, the sulfidation corrosion-resistant high temperature member 1A of the present embodiment comprises a 5-layer structure having the silicon oxide layer 20, the first titanium oxide layer 30, the carbon layer 40, and the second titanium oxide layer 50 sequentially provided on the surface of the substrate 10.

The carbon layer 40 is not limited, as long as it can be provided on the first titanium oxide layer 30. Nor is the thickness of the carbon layer 40 limited, but its range of 10 to 30 *µ*m is preferred. The carbon layer 40 of a thickness in this range can be easily provided, and can fully achieve the effects to be described later.

The second titanium oxide layer 50 is not limited, if it can be provided on the carbon layer 40. A titanium oxide constituting the second titanium oxide layer 50 is the same as that for the first titanium oxide layer 30. Nor is the thickness of the second titanium oxide layer 50 limited, but this thickness is preferably in the range of 0.01 to 10 *µ*m, more preferably in the range of 0.01 to 5 *µ*m, and particularly preferably in the range of 0.01 to 1 *µ*m. The other constituents are the same as those in the sulfidation corrosion-resistant high temperature member 1 according to Embodiment 1, so that their explanations are omitted by assigning them the same reference numerals as those in Embodiment 1.

The sulfidation corrosion-resistant high temperature member 1A of such a structure has the carbon layer 40 provided between the first titanium oxide layer 30 and the second titanium oxide layer 50. Thus, in addition to the effects explained in Embodiment 1, the sulfidation corrosion-resistant high temperature member 1A can prevent Fe or the like, which constitutes the substrate 10, from diffusing to the surface of the sulfidation corrosion-resistant high temperature member 1A through the second titanium oxide layer 50 by a diffusion reaction. Hence, sulfidation corrosion resistance can be enhanced. This effect is exhibited even in the absence of the second titanium oxide layer 50. Furthermore, the sulfidation corrosion-resistant high temperature member 1A has the second titanium oxide layer 50 which minimally cracks and is uniform. Thus, it has better sulfidation corrosion resistance.

### Details will be described later.

Next, the sulfidation corrosion preventing method according to the present embodiment will be described. The methods of forming the silicon oxide layer 20 and the first titanium oxide layer 30 are the same as those in Embodiment 1, and their explanations are omitted. The sulfidation corrosion preventing method according to the present embodiment comprises forming the carbon layer 40 on the surface of the first titanium oxide layer 30, and coating a titanium-containing coating fluid containing a titanium metal or a titanium compound on the carbon layer 40, followed by heating and oxidation, to form the second titanium oxide layer 50.

The method of forming the carbon layer 40 is not limited. There can be named, for example, a method in which the substrate 10 having the silicon oxide layer 20 and the first titanium oxide layer 30 formed thereon is heated in an atmosphere comprising H₂, CO, CO₂, N₂ and H₂O to deposit carbon; a spray coating method in which the substrate 10 having the silicon oxide layer 20 and the first titanium oxide layer 30 formed thereon is sprayed with a carbon-based paint such as Shintron D-4807 (SHINTO PAINT CO., LTD.) or Super Carbon Coat (TOHOKUCARBON Co., Ltd.); a method in which the substrate 10 having the silicon oxide layer 20 and the first titanium oxide layer 30 formed thereon is immersed in a vessel filled with the carbon-based paint; or a method in which the substrate 10 having the silicon oxide layer 20 and the first titanium oxide layer 30 formed thereon is coated with the carbon-based paint with the use of a brush or the like.

No limitations are imposed on the method of forming the second titanium oxide layer 50, and the second titanium oxide layer 50 can be formed similar to the first titanium oxide layer 30. As in the case of forming the first titanium oxide layer 30, even with the use of any method of heating and oxidation, a liquid component such as water is removed from the second titanium oxide layer 50 formed from the titanium-containing coating fluid during the course of heating and oxidizing the titanium-containing coating fluid, whereby the second titanium oxide layer 50 is dried. As a result, the second titanium oxide layer 50 shrinks to generate internal stress in the second titanium oxide layer 50.

In the present embodiment, the second titanium oxide layer 50 is provided on the carbon layer 40. Thus, iron (Fe) or the like, which constitutes the substrate 10, can be prevented from diffusing to the surface of the sulfidation corrosion-resistant high temperature member 1A through the second titanium oxide layer 50 by a diffusion reaction. Moreover, even if internal stress occurs within the second titanium oxide layer 50, the carbon layer 40 deforms according to the internal stress, and can ease the internal stress within the second titanium oxide layer 50. Consequently, the occurrence of cracks in the second titanium oxide layer 50 can be prevented to form the second titanium oxide layer 50 which minimally cracks and is uniform.

### (Embodiment 3)

Embodiments 1 and 2 coat, heat and oxidize the silicon-containing coating fluid and the titanium-containing coating fluid individually. However, this is not limitative, and the silicon-containing coating fluid and the titanium-containing coating fluid may be collectively heated and oxidized.

For example, the silicon-containing coating fluid is coated on the substrate 10, and dried to form the silicon-containing coating layer (first coating step).

Then, the titanium-containing coating fluid is coated on the silicon-containing coating layer, and dried to form the first titanium-containing coating layer (second coating step).

Then, the carbon layer 40 is formed on the first titanium-containing coating layer (carbon layer formation step).

Then, the titanium-containing coating fluid is coated on the carbon layer 40, and dried to form the second titanium-containing coating layer (third coating step).

Finally, the silicon-containing coating layer, the first and second titanium-containing coating layers, and the carbon layer are collectively heated (heating and oxidation step). By so doing, the silicon oxide layer 20, the first titanium oxide layer 30, and the second titanium oxide layer 50 are formed, and the carbon layer 40 is degreased. By these steps, the silicon oxide layer 20, the first titanium oxide layer 30, the carbon layer 40, and the second titanium oxide layer 50 are formed on the substrate 10, as shown in Fig. 2.

The various methods described in Embodiments 1 and 2 can be used as the method of coating the silicon-containing coating fluid, the method of coating the titanium-containing coating fluid, and the method of forming the carbon layer 40.

When the silicon oxide layer 20, and the first and second titanium oxide layers 30, 50 are formed by collective heating and oxidation, as described above, the possibility for cracks to be generated in these oxide layers becomes low. As a result, the oxide layers having high sulfidation corrosion resistance can be formed on the substrate. Moreover, degreasing of the carbon layer 40 can be carried out at the same time. This is rational. Furthermore, the collective heating and oxidation save time and labor in production, as compared with individual heating of each coating layer. Thus, the oxide layers can be formed rationally on the substrate.

Alternatively, the first coating step, the second coating step, and the heating and oxidation step may be performed sequentially to form the silicon oxide layer 20 and the first titanium oxide layer 30 on the substrate 10, as shown in Fig. 1.

Alternatively, the first coating step, the second coating step, and the heating and oxidation step are performed sequentially, and then the carbon layer 40 is formed on the first titanium oxide layer 30. Then, the titanium-containing coating fluid may be coated on the carbon layer 40, and dried and heated to form the second titanium oxide layer 50 (titanium oxide layer formation step).

As noted above, the sulfidation corrosion preventing method according to the present invention may be performed in such a manner as to collectively heat and oxidize the respective coating fluids (layers) formed in the respective coating steps, or to individually heat and oxidize each of the coating fluids (layers). By this means, the respective materials to be heated are combined in a suitable order, for example, according to the heat source or the method of coating the coating fluid, whereby the oxide layers can be formed flexibly on the substrate 10.

### (Embodiment 4 - not an embodiment of the invention but an example useful for its understanding)

In Embodiments 1 to 3 described above, the first titanium oxide layer 30, etc. are provided on the surface of the substrate 10 which is free from cracking by sulfidation corrosion or the like, whereby the substrate 10 is protected from sulfidation corrosion. However, the present invention is not limited to such a mode, and the first titanium oxide layer 30, etc. may be provided on the cracked substrate to repair it. As the cracked substrate, there can be named, for example, a high temperature heat exchanger tube, such as a water wall tube, a superheater tube, or a reheater tube, of a thermal power generation boiler for combusting a fuel such as coal, petroleum or LNG. The surface of such a high temperature heat exchanger tube may undergo cracks, called an elephant skin (grooving corrosion), because of sulfidation corrosion or thermal stress due to a reducing combustion flame (combustion in a low oxygen concentration or a high hydrogen sulfide concentration) associated with the operation of a thermal power generation boiler. The present invention can also be used to repair such cracks.

For example, as in Embodiment 1, the silicon oxide layer and the titanium oxide layer may be formed on the surface of the cracked site of a high temperature heat exchanger tube.

Concretely, it is the first step to remove corrosive substances, for example, sulfides, adhering to the cracked site of the high temperature heat exchanger tube. Concretely, this site is sandblasted to remove the corrosive substances. Then, the silicon-containing coating fluid is coated on the surface of the cracked site of the high temperature heat exchanger tube, and dried to form the silicon-containing coating layer. Further, the silicon-containing coating fluid is heated and oxidized to form the silicon oxide layer. Then, the titanium-containing coating fluid is coated on the silicon oxide layer, and dried to form the titanium-containing coating layer. This titanium-containing coating layer is heated and oxidized to form the titanium oxide layer.

Thus, the elephant skin-like cracks caused to the high temperature heat exchanger tube are repaired with the silicon oxide layer and the titanium oxide layer formed on the cracks. Since the titanium oxide layer is formed on the silicon oxide layer, moreover, the occurrence of cracks in the titanium oxide layer can be prevented, even if internal stress develops within the titanium oxide layer. Consequently, the titanium oxide layer, which is dense, and involves very few cracks, is formed on the silicon oxide layer. Hence, the exposure of a cracked portion through cracks is curtailed, and the cracks can be repaired more reliably.

Needless to say, the silicon-containing coating fluid and the titanium-containing coating fluid may be collectively heated and oxidized, instead of being individually heated and oxidized. When the silicon oxide layer and the titanium oxide layer are formed upon collective heating and oxidation, the possibility for cracks to be generated in these oxide layers becomes even lower. Hence, the exposure of a cracked portion through cracks is further curtailed, and the cracks can be repaired even more reliably.

In the same manner as in Embodiment 2, moreover, the silicon oxide layer, the first titanium oxide layer, the carbon layer, and the second titanium oxide layer may be formed on the surface of the cracked site of the high temperature heat exchanger tube.

Concretely, it is the first step to remove corrosive substances, for example, sulfides, adhering to the cracked site of the high temperature heat exchanger tube. Concretely, this site is sandblasted to remove the corrosive substances. Then, the silicon-containing coating fluid is coated on the surface of the cracked site of the high temperature heat exchanger tube, and dried to form the silicon-containing coating layer. Further, the silicon-containing coating fluid is heated and oxidized to form the silicon oxide layer. Then, the first titanium-containing coating fluid is coated on the silicon oxide layer, and dried to form the first titanium-containing coating layer. This first titanium-containing coating layer is heated and oxidized to form the first titanium oxide layer. Then, the carbon layer is formed on the first titanium oxide layer. Further, the second titanium-containing coating fluid is coated on the carbon layer, and dried to form the second titanium-containing coating layer. This second titanium-containing coating layer is heated and oxidized to form the second titanium oxide layer.

Even in this case, the elephant skin-like cracks caused to the high temperature heat exchanger tube are repaired with the silicon oxide layer, the first titanium oxide layer, the carbon layer, and the second titanium oxide layer formed on the cracks. Even if internal stress occurs within the second titanium oxide layer, the carbon layer deforms according to the internal stress , and can ease the internal stress within the second titanium oxide layer. Consequently, the second titanium oxide layer 50, which minimally cracks, can be formed. Hence, the exposure of a cracked portion through cracks is further curtailed, and the cracks can be repaired more reliably.

The silicon-containing coating fluid, the first titanium-containing coating fluid, and the second titanium-containing coating fluid may be collectively heated and oxidized. When the silicon oxide layer, the first titanium oxide layer, and the second titanium oxide layer are formed upon collective heating and oxidation, the possibility for cracks to be generated in these oxide layers becomes even lower. Hence, the exposure of a cracked portion through the cracks is further curtailed, and the cracks can be repaired even more reliably.

Further, the heat exchanger tube repairing method according to Embodiment 4 can be performed at much lower cost than the conventional repairing method of applying a film of nickel-chromium to the heat exchanger tube by plasma spraying.

### (Other embodiments)

In Embodiments 1 to 4 described above, the above-mentioned silicon-containing coating fluid is coated, and then heated and oxidized to form the silicon oxide layer 20. However, the method of forming the silicon oxide layer 20 is not limited. For example, the silicon oxide layer 20 may be formed by sputtering.

Besides, the two-layer combination consisting of the silicon oxide layer and the titanium oxide layer mentioned above may be formed in any numbers on the substrate. By forming a larger number of the two-layer combinations on the substrate, the sulfidation corrosion resistance can be enhanced more greatly. Further, a carbon layer or the like may be formed between the two-layer combination consisting of the silicon oxide layer and the titanium oxide layer and a two-layer combination consisting of other silicon oxide layer and other titanium oxide layer. By forming a larger number of the carbon layers, the sulfidation corrosion resistance can be enhanced to a greater degree.

### <Example 1>

A silicon dioxide layer (SiO₂ layer), a first titanium dioxide layer (first TiO₂ layer), a carbon layer, and a second titanium dioxide layer (second TiO₂ layer) were formed on the surface of a plate-shaped substrate comprising chromium molybdenum steel (STBA24) . The size of this plate-shaped substrate was 1 mm thick × 15 mm long × 10 mm wide.

Concretely, the surface of this plate-shaped substrate was degreased and dried with acetone. Then, the plate-shaped substrate was immersed in an AQUAMICA NP110 (a product of AZ Electronic Materials) solution, then withdrawn, and dried. Then, the substrate was heated using a burner to evaporate the solvent contained in the AQUAMICA NP110 solution and oxidize the silicon compound, whereby a SiO₂ layer 0.5 *µ*m thick was formed on the surface of the plate-shaped substrate.

Then, the plate-shaped substrate having the SiO₂ layer formed thereon was immersed in a PSO-306 (Photocatalytic Materials Inc.) solution, then withdrawn, and dried. Then, the plate-shaped substrate was heated again using the burner to evaporate the solvent contained in the PSO-306 solution and oxidize the titanium metal, whereby a first TiO₂ layer 0.5 *µ*m thick was formed on the surface of the SiO₂ layer.

Further, the resulting plate-shaped substrate was spray-coated with Shintron D-4807 (a carbon-based electroconductive paint, SHINTO PAINT CO., LTD.), and the coating was dried. Then, the plate-shaped substrate was heated again using the burner to evaporate the solvent contained in the Shintron D-4807, whereby a carbon layer 20 *µ*m thick was formed on the first TiO₂ layer.

In the same manner as in the above-described method of forming the first TiO₂ layer, a second TiO₂ layer 0.5 *µ*m thick was formed on the carbon layer, whereby a plate-shaped specimen A was obtained. That is, the plate-shaped specimen A having the 0.5 *µ*m thick SiO₂ layer, the 0.5 *µ*m thick first TiO₂ layer, the 20 *µ*m thick carbon layer, and the 0.5 *µ*m thick second TiO₂ layer sequentially formed on the plate-shaped substrate was obtained.

### <Comparative Example 1>

A plate-shaped specimen B having a 1 *µ*m thick first TiO₂ layer, a 28 *µ*m thick carbon layer, and a 2.5 *µ*m thick second TiO₂ layer sequentially formed on the surface of chromium molybdenum steel was obtained in the same manner as in Example 1, except that no SiO₂ layer was formed.

### (Sulfidation corrosion test)

A sulfidation corrosion test was conducted using the plate-shaped specimen A of Example 1 and the plate-shaped specimen B of Comparative Example 1. The sulfidation corrosion test was carried out by heating each plate-shaped specimen for 200 hours at 500°C in an atmosphere as shown in Table 1 which contained 300 ppm of hydrogen sulfide (H₂S).

**[Table 1]**

| Component | H₂ | CO | CO₂ | N₂ | H₂O |
|---|---|---|---|---|---|
| Proportion (%) | 2.7 | 6.8 | 8.8 | 73.1 | 8.6 |

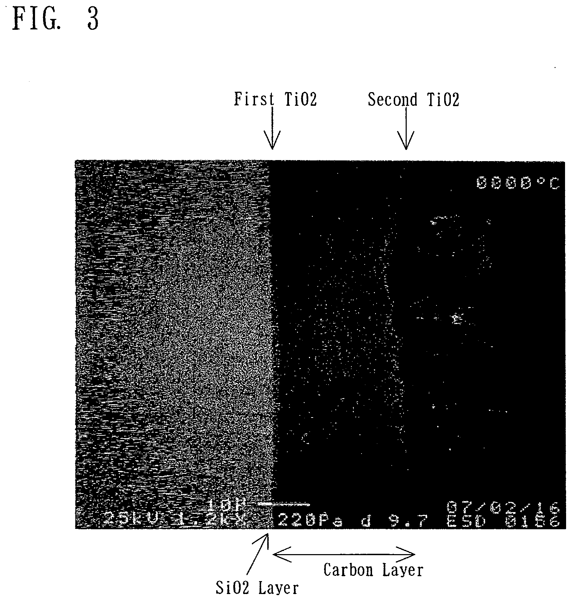

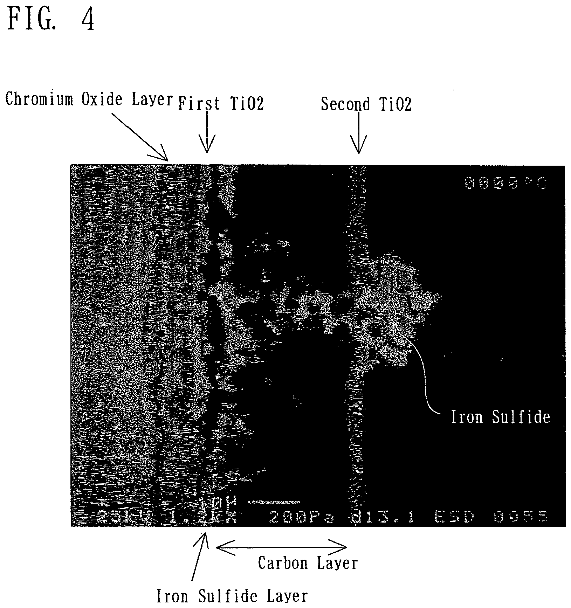

The results of the experiment on the plate-shaped specimen A of Example 1 are shown in Fig. 3, and the results of the experiment on the plate-shaped specimen B of Comparative Example 1 are shown in Fig. 4. In the plate-shaped specimen B shown in Fig. 4, cracks were seen to range from the second TiO₂ layer to the first TiO₂ layer. It was also seen that sulfidation corrosion proceeded from the cracks, and an iron sulfide layer was formed between the first TiO₂ layer and the carbon layer. It was also confirmed that iron sulfide of the iron sulfide layer deposited on the surface of the second TiO₂ layer through the cracks. Furthermore, it was confirmed that a chromium oxide layer was formed between the plate-shaped substrate and the first TiO₂ layer in accordance with sulfidation corrosion.

On the other hand, the plate-shaped specimen A shown in Fig. 3 had no cracks, and no iron sulfide layer was seen between the first TiO₂ layer and the carbon layer. It was also confirmed that no iron sulfide deposited on the surface of the second TiO₂ layer. It was further confirmed that no chromium oxide layer was formed between the plate-shaped substrate and the SiO₂ layer.

## Claims

1. A sulfidation corrosion preventing method, comprising:
a first step of forming a silicon oxide layer on a surface of a substrate; and
a second step of coating a titanium-containing coating fluid containing a titanium metal or a titanium compound on the silicon oxide layer, followed by heating and oxidation, to form a first titanium oxide layer.

2. The sulfidation corrosion preventing method according to claim 1, wherein the first step is to coat a silicon-containing coating fluid containing a silicon compound, followed by heating and oxidation, to form the silicon oxide layer.

3. The sulfidation corrosion preventing method according to claim 1 or 2, further comprising
a third step of forming a carbon layer on a surface of the first titanium oxide layer, and
a fourth step of coating a titanium-containing coating fluid containing a titanium metal or a titanium compound, followed by heating and oxidation, to form a second titanium oxide layer.

4. A sulfidation corrosion preventing method, comprising:
a first coating step of coating a silicon-containing coating fluid containing a silicon compound on a surface of a substrate, followed by drying, to form a silicon-containing coating layer;
a second coating step of coating a first titanium-containing coating fluid containing a titanium metal or a titanium compound on the silicon-containing coating layer, followed by drying, to form a first titanium-containing coating layer; and
a heating and oxidation step of heating and oxidizing the silicon-containing coating layer and the first titanium-containing coating layer to form a silicon oxide layer and a first titanium oxide layer.

5. The sulfidation corrosion preventing method according to claim 4, further comprising, after the second coating step,
a carbon layer formation step of forming a carbon layer on the first titanium-containing coating layer, and
a third coating step of coating a second titanium-containing coating fluid on the carbon layer, followed by drying, to form a second titanium-containing coating layer, and
wherein in the heating and oxidation step, after the third coating step, the carbon layer is heated for degreasing, and the silicon-containing coating layer, the first titanium-containing coating layer, and the second titanium-containing coating layer are heated and oxidized to form the silicon oxide layer, the first titanium oxide layer, and the second titanium oxide layer.

6. The sulfidation corrosion preventing method according to claim 4, further comprising, after the heating and oxidation step,
a carbon layer formation step of forming a carbon layer on the first titanium oxide layer, and
a titanium oxide layer formation step of coating a second titanium-containing coating fluid on the carbon layer, followed by drying and heating, to degrease the carbon layer and form a second titanium oxide layer.

7. A sulfidation corrosion-resistant high temperature member, comprising:
a substrate;
a silicon oxide layer provided on a surface of the substrate; and
a first titanium oxide layer provided on the silicon oxide layer.

8. The sulfidation corrosion-resistant high temperature member according to claim 7, further comprising
a carbon layer provided on the first titanium oxide layer, and
a second titanium oxide layer provided on the carbon layer.

## Patentansprüche

1. Verfahren zum Verhindern von Sulfidierungskorrosion, umfassend:
einen ersten Schritt, bei dem eine Siliziumoxidschicht auf einer Oberfläche eines Substrats gebildet wird, und
einen zweiten Schritt, bei dem die Siliziumoxidschicht mit einem Titan enthaltenden Beschichtungsfluid, das ein Titanmetall oder eine Titanverbindung enthält, beschichtet wird, gefolgt von Erhitzen und Oxidierung, um eine erste Titanoxidschicht zu bilden.

2. Verfahren zum Verhindern von Sulfidierungskorrosion nach Anspruch 1, wobei im ersten Schritt mit einem Silizium enthaltenden Beschichtungsfluid, das eine Siliziumverbindung enthält, beschichtet wird, gefolgt von Erhitzen und Oxidierung, um die Siliziumoxidschicht zu bilden.

3. Verfahren zum Verhindern von Sulfidierungskorrosion nach Anspruch 1 oder 2, ferner umfassend
einen dritten Schritt, bei dem eine Kohlenstoffschicht auf einer Oberfläche der ersten Titanoxidschicht gebildet wird, und
einen vierten Schritt, bei dem mit einem Titan enthaltenden Beschichtungsfluid, das ein Titanmetall oder eine Titanverbindung enthält, beschichtet wird, gefolgt von Erhitzen und Oxidierung, um eine zweite Titanoxidschicht zu bilden.

4. Verfahren zum Verhindern von Sulfidierungskorrosion, umfassend:
einen ersten Beschichtungsschritt, bei dem eine Oberfläche eines Substrats mit einem Silizium enthaltenden Beschichtungsfluid, das eine Siliziumverbindung enthält, beschichtet wird, gefolgt von Trocknen, um eine Silizium enthaltende Beschichtungsschicht zu bilden;
einen zweiten Beschichtungsschritt, bei dem die Silizium enthaltende Beschichtungsschicht mit einem ersten Titan enthaltenden Beschichtungsfluid, das ein Titanmetall oder eine Titanverbindung enthält, beschichtet wird, gefolgt von Trocknen, um eine erste Titan enthaltende Beschichtungsschicht zu bilden, und
einen Erhitzungs- und Oxidierungsschritt, bei dem die Silizium enthaltende Beschichtungsschicht und die erste Titan enthaltende Beschichtungsschicht erhitzt und oxidiert werden, um eine Siliziumoxidschicht und eine erste Titanoxidschicht zu bilden.

5. Verfahren zum Verhindern von Sulfidierungskorrosion nach Anspruch 4, ferner umfassend, nach dem zweiten Beschichtungsschritt,
einen Kohlenstoffschicht-Bildungsschritt, bei dem eine Kohlenstoffschicht auf der ersten Titan enthaltenden Beschichtungsschicht gebildet wird, und
einen dritten Beschichtungsschritt, bei dem die Kohlenstoffschicht mit einem zweiten Titan enthaltenden Beschichtungsfluid beschichtet wird, gefolgt von Trocknen, um eine zweite Titan enthaltende Beschichtungsschicht zu bilden, und
wobei im Erhitzungs- und Oxidierungsschritt nach dem dritten Beschichtungsschritt die Kohlenstoffschicht zur Entfettung erhitzt wird und die Silizium enthaltende Beschichtungsschicht, die erste Titan enthaltende Beschichtungsschicht und die zweite Titan enthaltende Beschichtungsschicht erhitzt und oxidiert werden, um die Siliziumoxidschicht, die erste Titanoxidschicht und die zweite Titanoxidschicht zu bilden.

6. Verfahren zum Verhindern von Sulfidierungskorrosion nach Anspruch 4, ferner umfassend, nach dem Erhitzungs- und Oxidierungsschritt,
einen Kohlenstoffschicht-Bildungsschritt, bei dem eine Kohlenstoffschicht auf der ersten Titanoxidschicht gebildet wird, und
einen Titanoxidschicht-Bildungsschritt, bei dem die Kohlenstoffschicht mit einem zweiten Titan enthaltenden Beschichtungsfluid beschichtet wird, gefolgt von Trocknen und Erhitzen, um die Kohlenstoffschicht zu entfetten und eine zweite Titanoxidschicht zu bilden.

7. Sulfidierungskorrisionsfestes Hochtemperaturelement, umfassend:
ein Substrat,
eine auf einer Oberfläche des Substrats angeordnete Siliziumoxidschicht und
eine auf der Siliziumoxidschicht angeordnete erste Titanoxidschicht.

8. Sulfidierungskorrosionsfestes Hochtemperaturelement nach Anspruch 7, ferner umfassend
eine auf der ersten Titanoxidschicht angeordnete Kohlenstoffschicht und
eine auf der Kohlenstoffschicht angeordnete zweite Titanoxidschicht.

## Revendications

1. Procédé de prévention de corrosion par sulfuration, comprenant :
une première étape de formation d'une couche d'oxyde de silicium sur une surface d'un substrat ; et
une deuxième étape de dépôt d'un fluide de revêtement contenant du titane contenant du titane métal ou un composé de titane sur la couche d'oxyde de silicium, suivie d'un chauffage et d'une oxydation, pour former une première couche d'oxyde de titane.

2. Procédé de prévention de corrosion par sulfuration selon la revendication 1, dans lequel la première étape consiste à déposer un fluide de revêtement contenant du silicium contenant un composé de silicium, suivie d'un chauffage et d'une oxydation, pour former la couche d'oxyde de silicium.

3. Procédé de prévention de corrosion par sulfuration selon la revendication 1 ou 2, comprenant en outre :
une troisième étape de formation d'une couche de carbone sur une surface de la première couche d'oxyde de titane, et
une quatrième étape de dépôt d'un fluide de revêtement contenant du titane contenant du titane métal ou un composé de titane, suivie d'un chauffage et d'une oxydation, pour former une deuxième couche d'oxyde de titane.

4. Procédé de prévention de corrosion par sulfuration, comprenant :
une première étape de dépôt pour déposer un fluide de revêtement contenant du silicium contenant un composé de silicium sur une surface d'un substrat, suivie d'un séchage, pour former une couche de revêtement contenant du silicium ;
une deuxième étape de dépôt pour déposer un premier fluide de revêtement contenant du titane contenant du titane métal ou un composé de titane sur la couche de revêtement contenant du silicium, suivie d'un séchage, pour former une première couche de revêtement contenant du titane ; et
une étape de chauffage et d'oxydation pour chauffer et oxyder la couche de revêtement contenant du silicium et la première couche de revêtement contenant du titane pour former une couche d'oxyde de silicium et une première couche d'oxyde de titane.

5. Procédé de prévention de corrosion par sulfuration selon la revendication 4, comprenant en outre, après la deuxième étape de dépôt,
une étape de formation de couche de carbone pour former une couche de carbone sur la première couche de revêtement contenant du titane, et
une troisième étape de dépôt pour déposer un deuxième fluide de revêtement contenant du titane sur la couche de carbone, suivie d'un séchage, pour former une deuxième couche de revêtement contenant du titane, et
dans lequel à l'étape de chauffage et d'oxydation, après la troisième étape de dépôt, la couche de carbone est chauffée pour dégraissage, et la couche de revêtement contenant du silicium, la première couche de revêtement contenant du titane, et la deuxième couche de revêtement contenant du titane sont chauffées et oxydées pour former la couche d'oxyde de silicium, la première couche d'oxyde de titane, et la deuxième couche d'oxyde de titane.

6. Procédé de prévention de corrosion par sulfuration selon la revendication 4, comprenant en outre, après l'étape de chauffage et d'oxydation,
une étape de formation de couche de carbone pour former une couche de carbone sur la première couche d'oxyde de titane, et
une étape de formation de couche d'oxyde de titane pour déposer un deuxième fluide de revêtement contenant du titane sur la couche de carbone, suivie d'un séchage et d'un chauffage, pour dégraisser la couche de carbone et former une deuxième couche d'oxyde de titane.

7. Élément haute température résistant à la corrosion par sulfuration, comprenant :
un substrat ;
une couche d'oxyde de silicium déposée sur une surface du substrat ; et
une première couche d'oxyde de titane déposée sur la couche d'oxyde de silicium.

8. Élément haute température résistant à la corrosion par sulfuration selon la revendication 7, comprenant en outre
une couche de carbone déposée sur la première couche d'oxyde de titane, et
une deuxième couche d'oxyde de titane déposée sur la couche de carbone.
